(19) Europäisches Patentamt
European Patent Office
Office européen des brevets

(11) Veröffentlichungsnummer: **0 473 033 A1**

(12) # EUROPÄISCHE PATENTANMELDUNG

(21) Anmeldenummer: **91113812.1**

(22) Anmeldetag: **17.08.91**

(51) Int. Cl.[5]: **C09D 5/03**, C09D 201/06, C09D 133/00, C09D 135/00

(30) Priorität: **30.08.90 DE 4027372**

(43) Veröffentlichungstag der Anmeldung: **04.03.92 Patentblatt 92/10**

(84) Benannte Vertragsstaaten: **AT BE CH DE ES FR GB IT LI NL SE**

(71) Anmelder: **BAYER AG**

**W-5090 Leverkusen 1 Bayerwerk(DE)**

(72) Erfinder: **Wamprecht, Christian, Dr.**
**Regattastrasse 20**
**W-4040 Neuss 22(DE)**
Erfinder: **Kreuder, Hans-Joachim, Dr.**
**Auf Rothenfeld 23a**
**W 4154 Tönis-vorst(DE)**

(54) **Pulverlacke und die Verwendung von ausgewählten Bindemittelkombinationen in Pulverlacken.**

(57) Ein Pulverlack, besteht im wesentlichen aus einem unterhalb 30 °C festen Gemisch aus A) einer Copolymerisatkomponente, die sowohl Carbonsäureanhydrid- als auch Hydroxylgruppen aufweist, B) einer Polyepoxidkomponente mit mindestens zwei Epoxidgruppen pro Molekül, C) einer Polyisocyanatkomponente mit mindestens zwei, gegebenenfalls blockierten Isocyanatgruppen pro Molekül und gegebenenfalls D) weiteren Hilfs- und Zusatzmitteln, sowie die Verwendung von Kombinationen der genannten Komponenten A) - C) als Bindemittel für Pulverlacke.

EP 0 473 033 A1

Die Erfindung betrifft Pulverlacke, bestehend im wesentlichen aus einem unterhalb 30°C festen Gemisch aus einer Copolymerisatkomponente mit eingebauten Säureanhydrid- und Hydroxylgruppen, einer Polyepoxidkomponente mit mindestens zwei Epoxidgruppen pro Molekül, einer Polyisocyanatkomponente mit mindestens zwei, gegebenenfalls blockierten Isocyanatgruppen pro Molekül und gegebenenfalls aus der Pulverlacktechnologie bekannten Hilfs- und Zusatzmitteln, sowie die Verwendung von unterhalb 30°C festen Gemischen von Bindemittelkomponenten der genannten Art in Pulverlacken.

Die Verwendung von Kombinationen aus Polyacrylaten mit mindestens zwei Carboxylgruppen pro Molekül und Polyepoxidverbindungen, gegebenenfalls auch auf Acrylatbasis, ist bereits bekannt. Solche Systeme werden beispielsweise beschrieben in der Japanischen Patentanmeldung 73-29-319 (Veröffentlichungs nummer: 49 116 134; C.A. 82 (24): 157 882 e), der Japanischen Patentanmeldung 75-146 705 (Veröffentlichungsnummer: 52 069 936; C.A. 88 (12): 75 374 a), DE-OS 2 347 680, US-PS 3 991 132 und US-PS 3 991 133.

Ebenfalls bekannt sind Kombinationen aus Polyacrylaten mit mindestens zwei Hydroxylgruppen pro Molekül und Polyisocyanatverbindungen, gegebenenfalls auch auf Acrylatbasis, wobei die Isocyanatgruppen blockiert oder nicht blockiert sein können Solche Systeme werden beschrieben in DE-OS 1 965 740, DE-OS 2 105 777, DE-OS 2 236 514, DE-OS 2 542 191, DE-OS 2 735 497, DE-OS 3 328 133, EP-A 254 152 oder EP-A 286 799.

Es sind auch Systeme bekannt, wo Mehrstoffgemische angewendet werden, So beschreibt die DE-OS 3 232 463 ein komplizaiertes 3-Komponenten-Gemisch aus einer carboxylgruppenhaltigen Isocyanatkomponente, einer Polyolkomponente und einer Epoxidkomponente.

Jetzt wurde gefunden, daß Copolymerisate olefinisch ungesättigter Verbindungen, die sowohl eingebaute Hydroxylgruppen als auch eingebaute intramolekulare Carbonsäureanhydridgruppen im gleichen Molekül enthalten, in Kombination mit einer Polyepoxidkomponente und einer Polyisocyanatkomponente mit gegebenenfalls blockierten Isocyanatgruppen ausgezeichnete Bindemittel für Pulverlacke darstellen, sofern die Kombinationen den diesbezüglichen Anforderungen bezüglich des Erweichungspunktes bzw. -bereichs genügen.

Gegenstand der Erfindung sind unterhalb 30°C feste Pulverlacke bestehend im wesentlichen aus

A) einer unterhalb 30°C festen Copolymerisatkomponente, die sowohl Carbonsäureanhydrid- als auch Hydroxylgruppen aufweist,

B) einer Polyepoxidkomponente, die mindestens zwei Epoxidgruppen pro Molekül aufweist,

C) einer Polyisocyanatkomponente, die mindestens zwei, gegebenenfalls blockierte Isocyanatgruppen pro Molekül aufweist und gegebenenfalls

D) aus der Pulverlack-Technologie bekannten Hilfs- und Zusatzmitteln.

Gegenstand der Erfindung ist auch die Verwendung von unterhalb 30°C festen Kombinationen aus

A) 20 bis 98 Gew.-Teilen einer Copolymerisatkomponente, bestehend aus mindestens einem Copolymerisat von olefinisch ungesättigten Verbindungen mit einem als Gewichtsmittel bestimmten Molekulargewicht von 1500 bis 75 000, welches sowohl

(i) 041 bis 6,0 Gew`-% an freien Hydroxylgruppen als auch

(ii) 1 bis 30 Gew.-% an Carbonsäureanhydridgruppen (berechnet als $C_4H_2O_3$)

chemisch gebunden enthält,

B) 1 bis 79 Gew.-Teilen einer Epoxidkomponente, bestehend aus mindestens einem organischen Polyepoxid mit mindestens zwei Epoxidgruppen pro Molekül und

C) 1 bis 79 Gew.-Teilen einer Isocyanatkomponente, bestehend aus mindestens einem organischen Polyisocyanat mit mindestens zwei, gegebenenfalls blockierten Isocyanatgruppen pro Molekül,

als Bindemittel für Pulverlacke, wobei sich die genannten Gewichtsteile vorzugsweise zu 100 ergänzen, mit der Maßgabe, daß auf jede Anhydridgruppe der Komponente A) 0,2 bis 8 Epoxidgruppen der Komponente B) und insgesamt 0,2 bis 8 freie und/oder blockierte Isocyanatgruppen der Komponente C) entfallen.

Die erfindungsgemäßen Pulverlacke können aus pulverförmigen Komponenten A), B), C) und gegebenenfalls D) bestehen, in welchem Falle jedes Pulverteilchen entweder aus A) oder B) oder C) oder D) bestünde, Vorzugsweise handelt es sich bei den erfindungsgemäßen Pulverlacken jedoch um "gemischte Pulver" ABC oder ABCD, d.h. um Pulver, bei denen jedes einzelne Pulverteilchen die genannten Einzelkomponenten enthält, Solche "gemischten Pulver" werden dann erhalten, wenn die Pulverlacke in Extrudern oder Knetern hergestellt werden, wie dies weiter unten offenbart ist.

Die Copolymerisatkomponente A) besteht aus mindestens einem Copolymerisat, welches sowohl chemisch eingebaute, freie Hydroxylgruppen in einer Menge von 0,1 bis 6,0 Gew.-%, vorzugsweise 0,2 bis 4,0 Gew.-% als auch chemisch eingebaute intramolekulare, cyclische Carbonsäureanhydridgruppen der Formeln

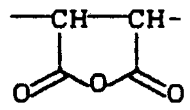

und/oder

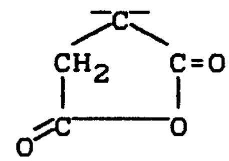

in einer Menge von 1 bis 30 Gew.-%, vorzugsweise 5 bis 25 Gew.-%, enthält. Die Copolymerisate weisen ein, nach der Methode der Gelpermeationschromatographie unter Verwendung von Polystyrol als Standard bestimmbares Molekulargewicht (Gewichtsmittel) von 1500 bis 75000, vorzugsweise 2000 bis 60000 und besonders bevorzugt 3000 bis 40000, auf. Es handelt sich bei den Copolymerisaten um solche auf Basis von vorzugsweise einfach olefinisch ungesättigten Monomeren. Besonders bevorzugt liegen in den Copolymerisaten pro Säureanhydridgruppe 0,2 bis 8, vorzugsweise 0,4 bis 4 und insbesondere 0,8 bis 2 Hydroxylgruppen vor.

Zur Herstellung dieser Copolymerisate kommen drei Gruppen von olefinisch ungesättigten Monomeren zum Einsatz und zwar

a) Hydroxylgruppen enthaltende, olefinisch ungesättigte Monomere,

b) intramolekulare Carbonsäureanhydridgruppen enthaltende, olefinisch ungesättigte Monomere und

c) Hydroxyl- und Carbonsäureanhydridgruppen-freie, nichtfunktionelle, olefinisch ungesättigte Monomere.

Die Monomere a) werden im allgemeinen in einer Menge von 0,5 bis 50, vorzugsweise 5 bis 40 Gew.-Teilen, die Monomeren b) in einer Menge von 1 bis 30, vorzugsweise 5 bis 25 Gew.-Teilen, und die Monomeren c) in einer Menge von 20 bis 98,5, vorzugsweise 35 bis 90 Gew.-Teilchen, eingesetzt, wobei außerdem zu berücksichtigen ist, daß die Anteile der einzelnen Monomeren in dem der Copolymerisation zuzuführenden Gemisch so besmessen werden, daß in den Copolymerisaten die obengenannten Mengen an chemisch eingebauten Hydroxyl- und Säureanhydridgruppen vorliegen. Der Gehalt der Copolymerisate an diesen Gruppierungen entspricht dem Gehalt des Monomergemischs an den gleichen Gruppen, da davon ausgegangen werden kann, daß die Copolymerisate bezüglich ihrer chemischen Zusammensetzung der chemischen Zusammensetzung des Monomergemischs entsprechen.

Bei den Monomeren a) handelt es sich um einfach olefinisch ungesättigte Alkohole, die vorzugsweise ein Molekulargewicht von 58 bis 500 und vorzusgweise aliphatisch gebundene Hydroxylgruppen aufweisen. Gut geeignet sind beispielsweise übliche Hydroxyalkylester der Acryl- und Methacrylsäure wie z.B. Hydroxyethyl(meth)acrylat, Hydroxypropyl(meth)acrylat, 4-Hydroxybutyl(meth)acrylat, Hydroxyalkylvinylether wie z.B. Hydroxyethylvinylether oder Hydroxybutylvinylether, Allylalkohol, Hydroxyderivate des (Meth)-acrylamids wie z.B. N-(3-Hydroxy-2,2-dimethylpropyl)-(meth)acrylamid; Umsetzungsprodukte von Glycidyl-(meth)acrylat mit Monocarbonsäuren, Umsetzungsprodukte von (Meth)acrylsäure mit Monoepoxidverbindungen, sowie Umsetzungsprodukte der zuvor genannten OH-funktionellen, olefinisch ungesättigten Verbindungen mit $\epsilon$-Caprolactaon oder Butyrolactaon.

Typische Beispiele für Monomere b) sind z.B. Itaconsäureanhydrid oder Maleinsäureanhydrid, wobei Maleinsäureanhydrid bevorzugt ist.

Die Monomeren c) weisen im allgemeinen ein Molekulargewicht von 86 bis 400 auf. Es handelt sich um die üblichen Hydroxylgruppen- und Säureanhydridgruppen-freien, vorzugsweise einfach olefinisch ungesättigten Monomeren, wie sie auch bereits bei den Verfahren des obengenannten Standes der Technik als Monomere eingesetzt worden sind. Typische Beispiele sind Ester der Acryl- und Methacrylsäure, wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, n-Butylmethacrylat, Isobutylmethacrylat oder 2-Ethylhexylmethacrylat, Vinylaromaten wie beispielsweise Styrol, Vinyltoluol, $\alpha$-Methylstyrol, $\alpha$-Ethylstyrol, kernsubstituierte, gegebenenfalls Isomerengemische darstellende Diethylstyrole, Isopropylstyrole, Butylstyrole und Methoxystyrole, Vinylether wie beispielsweise Ethylvinylether, n-Propylvinylether, Isopropylvinylether, n-Butylvinylether und Isobutylvinylether, Vinylester wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis c) verwendet werden, mit der Maßgabe, daß diese Auswahl der bei der Herstellung der Copolymerisate eingesetzten Monomere so erfolgt, daß die resultierenden Copolymerisate unterhalb 30 °C, vorzugsweise unterhalb 40 °C fest sind und bei Temperaturen von oberhalb 150 °C Flüssigkeiten darstellen. Diese Bedingungen besagen, daß die Copolymerisate einen mittels der Differentialthermoanalyse (DTA) bestimmten Erweichungspunkt bzw. -bereich innerhalb des Bereichs von 30 bis 150, vorzugsweise 40 bis 120 °C aufweisen. Diese für die erfindungsgemäße Verwendbarkeit der Copolymerisate wesentliche Bedingung wird dann erfüllt, wenn bei der Herstellung der Copolymerisate ein

geeignetes Verhältnis von "weichmachenden" Monomeren, die zur Erniedrigung der Erweichungstemperatur der Copolymeren führen, zu "hartmachenden" Monomeren, die zur Erhöhung der Erweichungstemperatur des Copolymeren führen, zur Anwendung gelangt.

"Weichmachende" Monomere sind beispielsweise Alkylester der Acrylsäure wie z.B. Methylacrylat, Ethylacrylat, Butylacrylat, Isobutylacrylat, 2-Ethylhexylacrylat, Laurylacrylat, Ethyldiglykolacrylat; Vinylester wie z.B. Vinylpropionat; Vinylether wie z.B. Vinylmethylether, Vinylethylether, Vinylpropylether, Vinylisobutylether, Vinyloctadecylether, Vinylcyclohexylether.

"Hartmachende" Monomere sind beispielsweise Alkylester der Methacrylsäure wie z.B. Methylmethacrylat, Ethylmethacrylat, Isobutylmethacrylat, Cyclohexylmethacrylat, 2-Phenylethylmethacrylat, Tetrahydrofurfurylmethacrylat, Isopropylmethacrylat, tert.-Butylmethacrylat, Neopentylmethacrylat, Isobornylmethacrylat, Benzylmethacrylat; Vinylaromaten wie z.B. Styrol, Vinyltoluol, α-Methylstyrol, α-Ethylstyrol; heterocyclische Vinylverbindungen wie z.B. Vinylpyrrolidon, Vinylcaprolactam oder Vinylcarbazol.

Die Herstellung der Copolymerisate kann durch Copolymerisation der beispielhaft genannten Monomeren a) bis c) nach üblichen radikalischen Polymerisationsverfahren erfolgen, wie beispielsweise Masse- oder Lösungspolymerisation.

Dabei werden die Monomeren bei Temperaturen von 60 bis 140°C, vorzugsweise 80 bis 120°C, in Gegenwart von Radikalbildnern und gegebenenfalls Molekulargewichtsreglern copolymerisiert.

Die Herstellung der Copolymerisate erfolgt vorzugsweise in inerten Lösungsmitteln. Geeignete Lösungsmittel sind beispielsweise Aromaten wie Benzol, Toluol, Xylol, Ester wie Ethylacetat, Butylacetat, Hexylacetat, Heptylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon, Methyl-n-amylketon, Methylisoamylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck, kann jedoch auch bei Drücken bis zu 20 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat oder tert.-Butylperbenzoat; Hydroperoxide wie beispielsweise tert.-Butylhydroperoxid, Cumolhydroperoxid; Dialkylperoxide wie Dicumylperoxid; tert.-Butyl-cumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozeß zugeführt werden, bei dem das Lösungsmittel beispielsweise in einem Ausdampfextruder bei ca. 120-160°C und einem Vakuum von 10-400 mbar, vorzugsweise 150-300 mbar entfernt und die erfindungsgemäß zu verwendenden Copolymerisate gewonnen werden.

Die Komponente B) besteht aus mindestens einer organischen Verbindung, die mindestens 2 Epoxidgruppen pro Molekül und einen mittels der Differenzialthermoanalyse (DTA) bestimmten Erweichunspunkt bzw. -bereich von 0 bis 150°C, vorzugsweise von 30 bis 150°C und besonders bevorzugt von 40 bis 120° aufweist. Komponenten B), die einen unter 30°C liegenden Erweichungspunkt oder -bereich aufweisen, oder die selbst bei Raumtemperatur flüssig sind, können auch in Kombination mit Komponenten A) kombiniert werden, allerdings vorausgesetzt die Komponenten A) haben einen verhältnismäßig hohen Erweichungspunkt oder -bereich innerhalb der genannten Bereiche und, weiterhin vorausgesetzt, die bevorzugte Herstellung der Pulverlacke in Knetern oder Extrudern kommt zur Anwendung, in welchem Falle

Kombinationen erhalten werden, die unterhalb 30°C fest sind, selbst wenn solche Komponenten B) (und/oder C)) verwendet werden. Im allgemeinen enthalten die Polyepoxide der Komponente B) pro Molekül 2 bis 50, vorzugsweise 2 bis 10 Epoxidgruppen.

Typische Beispiele für geeignete oder bevorzugt geeignete Polyepoxide sind Triglycidylisocyanurat, Terephthalsäurediglycidylester oder solche auf Basis von Glycidylethern des Bisphenol-A, wie sie beispielsweise von der Firma Shell unter der Bezeichnung ®Epikote 1001 (Epoxidgruppengehalt ca. 2 Mol/kg), ®Epikote 1002 (Epoxidgruppengehalt ca. 1,5 Mol/kg), ®Epikote 1055 (Epoxidgruppengehalt ca. 1,2 Mol/kg), ®Epikote 1007 (Epoxidgruppengehalt ca. 0,55 Mol/kg) oder ®Epikote 3003 (Epoxidgruppengehalt ca. 1,3 Mol/kg), vertrieben werden. Ferner geeignet sind Glycidylether von Heterocyclen wie z.B. Triglycidylurazol oder Epoxidgruppen enthaltende Copolymerisate olefinisch ungesättigter Verbindungen mit einer Glasübergangstemperatur von ≧30°C, hergestellt z.B. durch Mitverwendung von Glycidyl(meth)acrylat als Comonomer.

Die Komponente C) besteht aus mindestens einer organischen Verbindung, die pro Molekül mindestens 2, gegebenenfalls blockierte Isocyanatgruppen und einen mittels der Differenzialthermoanalyse (DTA) bestimmten Erweichungspunkt oder -bereich von 0 bis 150°C, vorzugsweise von 30 bis 150°C und besonders bevorzugt von 40 bis 120°C aufweist. Komponenten C) mit Erweichungspunkten oder -bereichen unter 30°C oder solche, die selbst bei Raumtemperatur flüssig sind, können in Kombination mit Komponenten A) eingesetzt werden, vorausgesetzt, die Polyisocyanate weisen ausschließlich blockierte Isocyanatgruppen und einen verhältnismäßig hohen Erweichungspunkt oder -bereich innerhalb der genannten Bereiche auf und, weiterhin vorausgesetzt, die bevorzugte Methode der Herstellung der Pulverlacke in Knetern oder Extrudern kommt zur Anwendung, in welchem Falle unterhalb 30°C feste Kombinationen selbst dann erhalten werden, wenn solche Komponenten C) (und/oder B)) verwendet worden sind. Die als Komponente C) in Betracht kommenden Polyisocyanate weisen pro Molekül (im statistischen Mittel) 2 bis 10, vorzugsweise 2 bis 4, gegebenenfalls blockierte Isocyanatgruppen auf.

Gut geeignet sind diesen Ausführungen entsprechende, gegebenenfalls blockierte Isocyanatgruppen aufweisende Derivate von Diisocyanaten, ausgewählt aus der Gruppe bestehend aus 1-Isocyanato-3,3,5-trimethyl-5-isocyanatomethyl-cyclohexan (IPDI), 1,4-Diisocyanatocyclohexan, 4,4'-Diisocyanato-dicyclohexylmethan, 1,3- oder 1,4-Bis(2-isocyanatoprop-2-yl)benzol und 1-Isocyanato-1-methyl-4(3)-isocyanatomethylcyclohexan.

Besonders bevorzugt werden entsprechende, in der Regel mit ε-Caprolactam ganz oder teilweise blockierte Derivate von cycloaliphatischen Diisocyanaten der genannten Art, insbesondere von IPDI verwendet. Auch unmodifizierte Diisocyanate der beispielhaft genannten Art in mit ε-Caprolactam blockierter Form können verwendet werden, falls sie den genannten Voraussetzungen bezüglich des Schmelzpunkts bzw. -bereichs entsprechen. Gut geeignet sind auch beispielsweise ε-Caprolactam-blockiertes IPDI (DE-OS 2 105 777), ε-Caprolactam-blockierte Umsetzungsprodukte von IPDI mit unterschüssigen Mengen an mehrwertigen Alkoholen (DE-OS 2 542 191, DE-OS 3 004 876), zumindest teilweise blockierte Trimerisate von IPDI (DE-OS 2 842 641 bzw. DE-OS 2 735 497), Hydrazin-modifizierte, ε-Caprolactam-blockierte Lackpolyisocyanate gemäß DE-OS 3 039 824, Uretdiongruppen aufweisende Derivate von IPDI gemäß EP-A-00 45 994, EP-A-00 45 995 oder EP-A-00 45 998 oder auch freie Isocyanatgruppen aufweisende Derivate des 1,3- oder 1,4-Bis-(2-isocyanatoprop-2-yl)benzols oder 1-Isocyanato-1-methyl-4(3)-isocyanatomethylcyclohexans, wie sie beispielsweise in der EP-A-0 254 152 beschrieben sind.

Obwohl es theoretisch möglich ist, Komponenten B) und/oder C) zu verwenden, die unterhalb 30°C flüssig sind, muß gesagt werden, daß die bevorzugten Komponenten B) und C) unterhalb 30°C, vorzugsweise unterhalb 40°C fest und oberhalb 150°C, vorzugsweise oberhalb 120°C, flüssig sind.

Bei der Komponente D) handelt es sich um die in der Pulverlack-Technologie bekannten Hilfs- und Zusatzmittel. Zu nennen sind dabei Pigmente wie z.B. Titandioxid, Verlaufsmittel wie z.B. die hierfür üblicherweise eingesetzten Siliconverbindungen.

Obwohl die Pulverlacke an sich ohne Beschleunigungsmittel eingebrannt werden können, besteht zusätzlich noch die Möglichkeit der Zugabe von Katalysatoren, die die Reaktion zwischen Hydroxyl- und Carbonsäureanhydridgruppen, bzw. Hydroxyl- und Isocyanatgruppen einerseits und Epoxid- und Carbonsäuregruppen andererseits beschleunigen und dadurch die Einbrennzeit und/oder die Einbrenntemperatur reduzieren.

Solche Katalysatoren sind z.B. tert. Aminogruppen aufweisende Verbindungen, wie z.B. 1,4-Diazabicyclo(2.2.2)octan, 1,8-Diazabicyclo(5.4.0)undec-7-en, 1,5-Diazabicyclo(4.3.0)non-5-en, 1,2-Dimorpholinoethan und 1,3,5-Tricyclohexylhexahydro-1,3,5-triazin; Salze, basierend auf tert.-Aminogruppen und quartären Ammoniumgruppen enthaltenden Verbindungen wie z.B. (2-Hydroxyethyl)trimethylammoniumchlorid, Triethylaminhydrochlorid, Tetrabutylammoniumchlorid, Tetraethylammoniumbromid, Tetrahexylammoniumchlorid und Tetramethylammoniumchlorid; organische Zinnverbindungen wie z.B. Zinndioctoat, Dibutylzinndilaurat, Dibutylzinndiacetat und Dibutylzinndichlorid; Phosphorverbindungen, wie z.B. Triphenylphosphin.

Zur Herstellung der gebrauchsfertigen pulverförmigen Überzugsmittel werden die lösungsmittelfreien Copolymerisate A), die Polyepoxidverbindungen B), die Polyisocyanatverbindungen C) und gegebenenfalls die Zusatzmittel D), vorzugsweise in Extrudern oder Knetern bei Temperaturen von vorzugsweise 100 bis 120 °C in der Schmelze homogenisiert. Der erstarrte Feststoff wird gemahlen und durch Sieben von Kornanteilen oberhalb der gewünschten Korngröße, beispielsweise oberhalb 0,1 mm befreit. Es ist jedoch auch möglich, die erfindungsgemäßen Pulverlacke durch Abmischen der pulverförmigen Einzelkomponenten herzustellen.

Die Mengenverhältnisse der Einzelkomponenten A), B) und C) werden im allgemeinen so gewählt, daß auf jede Anhydridgruppe der Komponente A) insgesamt 0,2 bis 8, vorzugsweise 0,4 bis 4 und besonders bevorzugt 0,8 bis 1,5 Epoxidgruppen der Komponente B) sowie 0,2 bis 8, vorzugsweise 0,4 bis 4 und besonders bevorzugt 0,8 bis 1,5 (blockierte) Isocyanatgruppen der Komponente C) entfallen.

Beim Einbrennvorgang reagieren vermutlich die Hydroxylgruppen der Komponente A) zunächst mit den Anhydridgruppen der Komponente A) unter Anhydridringöffnung und Ausbildung von Halbesterstrukturen. Die freien Carbonsäuregruppen dieser Halbesterstrukturen können anschließend mit den Epoxidgruppen der Komponente B) reagieren, wobei Hydroxylgruppen entstehen, Diese Hydroxylgruppen können schließlich mit den (blockierten) Isocyanatgruppen der Komponente C) abreagieren, wobei gegebenenfalls Blockierungsmittel abgespalten wird und Urethanstrukturen entstehen, Bedingt durch die komplexen Vernetzungsvorgänge die beim Einbrennvorgang der erfindungsgemäßen Pulverlacke ablaufen, erhält man hochvernetzte Beschichtungen mit außergewöhnlich guten Lösungsmittelbeständigkeiten. Je nach Zusammensetzung und Mischungsverhältnisse der Komponenten A) bis C) erhält man hochglänzende, aber auch matte Beschichtungen, so daß die erfindungsgemäßen Pulverlacke als Beschichtungsmittel für vielfältigste Anwendungsmöglichkeiten eingesetzt werden können.

Die erfindungsgemäßen pulverförmigen Überzugsmittel können nach üblichen Pulverauftragsverfahren wie z.B. elektrostatischem Pulversprühen oder Wirbelsintern, auf die zu überziehenden, hitzeresistenten Substrate aufgebracht werden. Die Härtung der Überzüge kann durch Erhitzen auf Temperaturen von 130 bis 220 °C, vorzugsweise 150 bis 200 °C erfolgen. Man erhält dabei harte, glänzende oder matte, lösungsmittelfeste Überzüge mit hervorragenden Korrosionsschutzeigenschaften und einer guten Wärmefarbstabilität.

Die erfindungsgemäßen Bindemittelkombinationen stellen daher wertvolle Bindemittel für Pulverlacke dar. Da in diesen Pulverlacken zunächst keine freien Carboxylgruppen vorliegen, weisen sie bei Raumtemperatur bzw. leicht erhöhter, unterhalb der Erweichungstemperatur liegender Temperatur eine sehr gute Lagerstabilität auf, wobei es im Gegensatz zu Systemen des Standes der Technik nicht zu sogenannten schleichenden Vorvernetzungsreaktionen kommen kann.

Die erfindungsgemäßen Pulverlacke eignen sich insbesondere zur Beschichtung von hitzeresistenten Metall- oder Glassubstraten.

In den nachfolgenden Beispielen beziehen sich alle Prozentangaben, sofern nichts anderslautendes angemerkt, auf das Gewicht.

I. Allgemeine Herstellungsvorschrift für die Hydroxyl- und Anhydridgruppen enthaltenden Copolymerisate $A_1$ bis $A_7$

In einem 25-l-Edelstahldruckreaktor mit Rühr-, Kühl- und Heizvorrichtungen wird Teil I vorgelegt und auf Reaktionstemperatur aufgeheizt. Dann werden parallel Teil 11 (Zugabe über einen Zeitraum von insgesamt 3 Stunden) und Teil III (Zugabe über einen Zeitraum von insgesamt 3,5 Stunden) zudosiert. Anschließend wird 1 Stunde bei der angegebenen Temperatur nachgerührt.

Die erhaltenen Polymerlösungen werden in einem handelsüblichen Ausdampfextruder bei einer Temperatur von ca. 150 °C, einer Verweilzeit von ca. 2 Minuten und einem Vakuum von ca. 200 mbar vollständig vom Lösungsmittel befreit, anschließend abgekühlt und granuliert.

Die Reaktionstemperaturen und die Zusammensetzungen der Teile I bis III sind in Tabelle I, zusammen mit den Kenndaten der erhaltenen Copolymerisate aufgeführt.

**Tabelle I** (Mengenangaben in g)

| Copolymerisate | $A_1$ | $A_2$ | $A_3$ | $A_4$ | $A_5$ | $A_6$ | $A_7$ |
|---|---|---|---|---|---|---|---|
| **Teil I** | | | | | | | |
| Toluol | 8000 | 8000 | 8000 | 8000 | 8000 | 8000 | 8000 |
| **Teil II** | | | | | | | |
| Methylmethacrylat | 3718 | 4592 | 3118 | 3118 | 2974 | 3440 | 3764 |
| Butylmethacrylat | - | 3024 | 3764 | - | 2150 | 3440 | 3118 |
| 2-Ethylhexylmethacrylat | 3136 | - | - | - | - | - | - |
| Butylacrylat | - | - | - | 3764 | 1613 | - | - |
| Styrol | 1680 | 1344 | 1612 | 1612 | 1613 | 1614 | 1612 |
| Hydroxyethylmethacrylat | 1266 | 1064 | 1290 | 1290 | - | 1290 | 1290 |
| Hydroxypropylmethacrylat | - | - | - | - | 1434 | - | - |
| Maleinsäureanhydrid | 952 | 728 | 968 | 968 | 968 | 968 | 968 |
| **Teil III** | | | | | | | |
| tert.-Butylperoxy-2-ethylhexanoat (70 %ig in Isododecan) | 640 | 640 | 640 | 640 | 640 | 640 | 640 |
| Toluol | 608 | 608 | 608 | 608 | 608 | 608 | 608 |
| Polymerisationstemperatur (°C) | 110 | 110 | 110 | 110 | 110 | 110 | 110 |
| Temperatur der Nachrührphase (°C) | 90 | 90 | 90 | 90 | 90 | 90 | 90 |
| Festgehalt (%) | 55,4 | 55,5 | 55,1 | 55,6 | 55,0 | 55,5 | 55,0 |
| Viskosität (23°C, mPa.s) | 18490 | 21340 | 12883 | 3766 | 3849 | 13897 | 16023 |
| Erweichungspunkt des Festharzes (DTA, °C) | 60,4 | 53,5 | 59,4 | 40,8 | 56,5 | 60,9 | 65,2 |

II. Herstellung der erfindungsgemäßen Pulverlackbeschichtungsmittel

Die Copolymerisate $A_1$ bis $A_7$ werden jeweils mit dem Polyepoxid B), dem Polyisocyanat C) und gegebenenfalls anderen Hilfs- und Zusatzmitteln D) in einem Extruder aufgeschmolzen und homogenisiert. Nach dem Erstarren der ausgetragenen Schmelze wird das Produkt gemahlen, mittels einer elektrostatischen Sprüheinrichtung auf Prüfbleche appliziert und anschließend 15 Minuten bei 170 °C ausgehärtet.

Die Lösungsmittelbeständigkeit der ca. 55 µm dicken Lackfilme wird durch einen Wischtest mit einem Acetongetränkten Wattebausch geprüft. Angegeben wird die Anzahl der Doppelhübe, nach denen der Lackfilm ohne sichtbare Veränderung bleibt. Mehr als 50 Doppelhübe pro Film wurden nicht durchgeführt.

In Tabelle II sind die jeweiligen Formulierungen in Gewichtsprozenten sowie die Lösungsmittelbeständigkeit als Grad der Vernetzung aufgeführt.

<u>Tabelle II</u> Formulierungen der erfindungsgemäßen Pulverbeschichtungsmittel, Angaben in Gewichtsprozenten

| Formulierung | 1 | 2 | 3 | 4 | 5 | 6 | 7 | 8 | 9 | 10 | 11 | 12 |
|---|---|---|---|---|---|---|---|---|---|---|---|---|
| Copolymerisat | 39,0 $A_1$ | 41,4 $A_2$ | 46,1 $A_3$ | 42,0 $A_3$ | 46,5 $A_4$ | 42,3 $A_4$ | 40,2 $A_4$ | 43,7 $A_5$ | 41,6 $A_5$ | 42,0 $A_6$ | 41,1 $A_6$ | 41,1 $A_7$ |
| Polyepoxid I | 6,5 | 5,3 | 1,2 | 7,3 | 5,4 | 7,2 | 6,8 | 7,5 | | 7,3 | | |
| Polyepoxid II | | | | | | | | | 10,0 | | 9,7 | 9,7 |
| Polyisocyanat I | | | 11,8 | 10,7 | 8,1 | 10,5 | | 8,8 | 8,4 | 10,7 | 10,2 | 10,2 |
| Polyisocyanat II | | | | | | | 13,0 | | | | | |
| Polyisocyanat III | 14,5 | 13,3 | | | | | | | | | | |
| Titandioxid | 40,0 | 40,0 | 40,0 | 40,0 | 40,0 | 40,0 | 40,0 | 40,0 | 40,0 | 40,0 | 40,0 | 40,0 |
| Acetonwischtest (Anzahl der Doppelhübe) | 50 | 50 | 50 | 50 | 45 | 50 | 44 | 47 | 43 | 50 | 48 | 50 |

Polyepoxid I: Triglycidylisocyanurat
Polyepoxid II: Diglycidylterephthalat
Polyisocyanat I: Addukt aus Trimethylolpropan und Isophorondiisocyanat, mit ε-Caprolactam blockiert (Gehalt an blockierten Isocyanatgruppen, berechnet als NCO, MG = 42: ca. 11,1 %)
Polyisocyanat II: Addukt aus Ethylenglykol und Isophorondiisocyanat, mit ε-Caprolactam blockiert (Gehalt an blockierten Isocyanatgruppen, berechnet als NCO, MG = 42: ca. 11,5 %)
Polyisocyanat III: Addukt aus Hexandiol und 4,4'-Dicyclohexylmethandiisocyanat, mit ε-Caprolactam blockiert (Gehalt an blockierten Isocyanatgruppen, berechnet als NCO, MG = 42: ca. 9,6 %)

## Patentansprüche

**1.** Unterhalb 30° C fester Pulverlack, bestehend im wesentlichen aus

A) einer unterhalb 30° C festen Copolymerisatkomponente, die sowohl Carbonsäureanhydridals auch

Hydroxylgruppen aufweist,
B) einer Polyepoxidkomponente, die mindestens zwei Epoxidgruppen pro Molekül aufweist,
C) einer Polyisocynatkomponente, die mindestens zwei, gegebenenfalls blockierte Isocyanatgruppen pro Molekül aufweist und gegebenenfalls
D) aus der Pulverlack-Technologie bekannten Hilfs- und Zusatzmitteln.

**2.** Pulverlack gemäß Anspruch 1, dadurch gekennzeichnet, daß er im wesentlichen besteht aus
A) 20 bis 98 Gew.-Teilen einer Copolymerisatkomponente, bestehend aus mindestens einem Copolymerisat von olefinisch ungesättigten Verbindungen mit einem als Gewichtsmittel bestimmten Molekulargewicht von 1500 bis 75 000, welches sowohl
(i) 0,1 bis 6,0 Gew.-% an freien Hydroxylgruppen als auch
(ii) 1 bis 30 Gew.-% an Carbonsäureanhydridgruppen (berechnet als $C_4H_2O_3$)
chemisch gebunden enthält,
B) 1 bis 79 Gew.-Teilen einer Epoxidkomponente, bestehend aus mindestens einem organischen Polyepoxid mit mindestens zwei Epoxidgruppen pro Molekül und
C) 1 bis 79 Gew.-Teilen einer Isocyanatkomponente, bestehend aus mindestens einem organischen Polyisocyanat mit mindestens zwei, gegebenenfalls blockierten Isocyanatgruppen pro Molekül, und gegebenenfalls
D) aus der Pulvrlack-Technologie bekannten Hilfs- und Zusatzmitteln,
mit der Maßgabe, daß auf jede Anhydridgruppe der Komponente A) 0,2 bis 8 Epoxidgruppen der Komponente B) und insgesamt 0,2 bis 8 freie und/oder blockierte Isocyanatgruppen der Komponente C) entfallen.

**3.** Pulverlack gemäß den Ansprüchen 1 und 2, dadurch gekennzeichnet, daß die Copolymerisate der Komponente A) durch radikalisch initiierte Copolymerisation erhaltene Copolymerisate aus
a) 0,5 bis 50 Gew.-Teilen copolymerisierbaren, Hydroxylgruppen enthaltenden Monomeren,
b) 1 bis 30 Gew.-Teilen copolymerisierbaren, Anhydridgruppen enthaltenden Monomeren, sowie
c) 20 bis 98,5 Gew.-Teilen copolymerisierbaren, Hydroxyl- und Anhydridgruppen-freien Monomeren
darstellen.

**4.** Pulverlack gemäß den Ansprüchen 1 bis 3, dadurch gekennzeichnet, daß in den Copolymerisaten der Komponente A) als anhydridfunktionelle Monomere Maleinsäureanhydrid und/oder Itaconsäureanhydrid in copolymerisierter Form vorliegen.

**5.** Pulverlack gemäß den Ansprüchen 1 bis 4, dadurch gekennzeichnet, daß in den Copolymerisaten der Komponente A) als hydroxyfunktionelle Monomere Hydroxyalkylester der Acryl und/oder Methacrylsäure vorliegen.

**6.** Pulverlack gemäß den Ansprüchen 1 bis 5, dadurch gekennzeichnet, daß es sich bei der Polyepoxidkomponente B) um mindestens ein Polyepoxid, ausgewählt aus der Gruppe bestehend aus Triglycidylisocyanurat, Terephthalsäurediglycidylester und solchen auf Basis von Glycidylethern des Bisphenol-A handelt.

**7.** Pulverlack gemäß den Ansprüchen 1 bis 6, dadurch gekennzeichnet, daß es sich bei der Polyisocyanatkomponente C) um gegebenenfalls mit Blockierungsmitteln für Isocyanatgruppen blockierte, modifizierte Polyisocyanate auf Basis von organischen Diisocyanaten, ausgewählt aus der Gruppe bestehend aus 1-Isocyanato-3,3,5-trimethyl-5-isocyanatomethyl-cyclohexan, 1,4-Diisocyanato-cyclohexan, 4,4'-Diisocyanato-dicyclohexylmethan, 1,3- oder 1,4-Bis(2-isocyanatoprop-2-yl)benzol und 1-Isocyanato-1-methyl-4(3-isocyanatomethyl)-cyclohexan handelt.

**8.** Verwendung von unterhalb 30 °C festen Kombinationen aus
A) 20 bis 98 Gew.-Teilen einer Copolymerisatkomponente, bestehend aus mindestens einem Copolymerisat von olefinisch ungesättigten Verbindungen mit einem als Gewichtsmittel bestimmten Molekulargewicht von 1500 bis 75 000, welches sowohl
(i) 0,1 bis 6,0 Gew.-% an freien Hydroxylgruppen als auch
(ii) 1 bis 30 Gew.-% an Carbonsäureanhydridgruppen (berechnet als $C_4H_2O_3$)
chemisch gebunden enthält,
B) 1 bis 79 Gew.-Teilen einer Epoxidkomponente, bestehend aus mindestens einem organischen

Polyepoxid mit mindestens zwei Epoxidgruppen pro Molekül und

C) 1 bis 79 Gew.-Teilen einer Isocyanatkomponente, bestehend aus mindestens einem organischen Polyisocyanat mit mindestens zwei (blockierten) Isocyanatgruppen pro Molekül,

als Bindemittel für Pulverlacke, mit der Maßgabe, daß auf jede Anhydridgruppe der Komponente A) 0,2 bis 8 Epoxidgruppen der Komponente B) und insgesamt 0,2 bis 8 freie und/oder blockierte Isocyanatgruppen der Komponente C) entfallen.

Europäisches Patentamt

# EUROPÄISCHER RECHERCHENBERICHT

Nummer der Anmeldung

EP 91113812.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| X | DE - A1 - 3 010 874 (BASF FARBEN & FASERN AG) * Ansprüche; Seiten 5,6 unter IV * -- | 1 | C 09 D 5/03<br>C 09 D 201/06<br>C 09 D 133/00<br>C 09 D 135/00 |
| A | DATABASE WPI, Nr. 80-35 371, DERWENT PUBLICATIONS LTD., London, GB * Zusammenfassung * & JP-A-55-045 759 (KAPA) 01-04-1980 ---- | 1 | |

RECHERCHIERTE SACHGEBIETE (Int Cl 5)

C 09 D 5/00
C 09 D 201/00
C 09 D 133/00
C 09 D 135/00
C 09 D 163/00
C 09 D 175/00

Der vorliegende Recherchenbericht wurde für alle Patentansprüche erstellt.

| Recherchenort | Abschlußdatum der Recherche | Prüfer |
|---|---|---|
| WIEN | 27-11-1991 | PAMMINGER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82